# EUROPEAN PATENT APPLICATION

(11) **EP 3 671 586 A1**
(43) Date of publication of application: **24.06.2020**
(21) Application number: 18214060.8
(22) Date of filing: 19.12.2018
(51) Int. Cl.: G06Q 10/06

(54) **PUBLISH/SUBSCRIBE SYSTEM AND PROCESS FOR A PUBLISH/SUBSCRIBE SYSTEM**

(71) Applicant: Siemens Aktiengesellschaft, 80333 München (DE)
(72) Inventor: Hackländer, Frank, 70599 Stuttgart (DE); Simakov, Dmitry, 76131 Karlsruhe (DE)

(57) **Abstract**

The invention relates to a publish/subscribe system comprising at least a publisher configured to generate messages which are categorized into topics; at least a subscriber configured to receive only the messages which belong to at least one predefined topic which is one of the topics into which the messages generated by the publisher are categorized; and a message broker configured to forward the messages which belong to the predefined topic and which are generated by the publisher from the publisher to the subscriber. The publisher comprises a postbox configured to receive confirmations of message delivery to the sub-scriber from the message broker. The message broker comprises a first pub-outbox configured to send the publisher confirmations of delivery to the subscriber after messages are delivered to the subscriber.

## Description

The invention relates to a publish/subscribe system and a process for a publish/subscribe system.

A typical publish/subscribe system describes a messaging pattern where senders of messages, named publishers, do not program the messages to be sent directly to specific receivers, named subscribers, but instead categorize the published messages into topics without knowledge of which subscribers, if any, there may be. Similarly, subscribers express interest in one or more topics and only receive messages that are of interest, without knowledge of which publishers, if any, there are.

In this respect, subscribers typically receive only a subset of the total messages published. The process of selecting messages for reception is named filtering. For the filtering purpose, publishers post messages to an intermediary message broker, and subscribers register subscriptions with that message broker which carries out the filtering. The message broker normally performs a store and forward function to route messages from publishers to subscribers.

In the publish-subscribe pattern, publishers and subscribers communicate with other asynchronously due to the message brokers. This characteristic is preferred by a microservice architecture (MSA) in which services are independently deployable. A well-known IoT (Internet of Things) platform from Siemens called MindSphere uses such microservice architecture.

In some cases, publishers would like to know whether their published messages have been delivery to any of the subscribers yet. For achieving this purpose, independent feedback channels between publishers and subscribers may be employed. The subscribers may send via the feedback channels confirmations of delivery of messages to the corresponding publishers.

However, the feedback channels serve as real-time bridges between publishers and subscribers and destroy thus the independency of services provided by the publish-subscribe pattern.

In addition, a large number of feedback channels have to be built up and set up between each of the publishers and each of the subscribers for the delivery acknowledgement purpose, which increases the system complexity considerably and leads to a low efficiency of the system. Especially, each time when a new publisher and/or a new subscriber is/are joined to such an existing system which already contains a huge number of publishers and subscribers, many new feedback channels the number of which corresponds to the number of existing subscribers/publishers have to be built up and set up.

Furthermore, additional security means is required for the communication between publishers and subscribers via feedback channels. Otherwise, the system is vulnerable to e.g. eavesdropping and/or viruses.

US 6,636,886 B1 discloses a publish-subscribe architecture using information objects in a computer network. A first computer system is coupled to a computer network including multiple other computer systems. A server computer in the network includes a class definition for creating information object instances of a specific type. The class definition includes a specification for attribute names and values that are to exist in each information object instance of the class.

Accordingly, it is an object of the present invention to overcome the drawbacks of employing the feedback channels in order to provide an improved way for the acknowledgement of the message delivery.

This object is inventively achieved by the independent claims 1, 10, 14 and 15. Advantageous further developments may be taken from the subclaims.

The invention provides, according to a first aspect, a publish/subscribe system comprising
at least a publisher configured to generate messages which are categorized into topics;
at least a subscriber configured to receive only the messages which belong to at least one predefined topic which is one of the topics into which the messages generated by the publisher are categorized; and
a message broker configured to forward the messages which belong to the predefined topic and which are generated by the publisher from the publisher to the subscriber.

The publisher comprises a postbox configured to receive confirmations of message delivery to the sub-scriber from the message broker, and the message broker comprises a first pub-outbox configured to send the publisher confirmations of delivery to the subscriber after messages are delivered to the subscriber.

It is favorable that by means of the inventive postbox of the publisher, the asynchronicity of the communication between the publisher and the subscriber is maintained without involving the external feedback channels which jeopardize the desired independency of services.

Moreover, the system structure with the inventive postbox of the publisher is much simpler than the one with a large number of feedback channels. The implementation of the postbox in the network is also quite simple, since the connection between the publisher and the message broker exists already, while in the state of the art the setup of the plurality of feedback channels in the network concerns large amount of work including e.g. regulating the routings between the publishers and the subscribers.

In addition, since the existing connection between the publisher and the message broker is utilized to transfer the acknowledgement of message delivery, no additional security means is required. Thus, the security management of the inventive publish/subscribe system is simpler than the conventional publish/subscribe system with external feedback channels as well.

In a preferable embodiment, the postbox of the publisher is further configured to receive confirmations of edit of the delivered messages from the subscriber.

In some cases, publishers would like to know whether their published messages are edited or not by the subscribers after the messages are received by the subscribers, in order to e.g. collect the information regarding the degree of satisfaction on the side of the subscribers. With the help of the inventive postbox of the publisher which is inter alia able to receive confirmations of edit of the delivered messages from the subscriber, this object is achieved.

In a further preferable embodiment, the subscriber comprises an editing unit configured to edit the received messages, in particular the content of the received messages. Thereby, the received messages, especially their contents, can be e.g. individualized based on the specific requirements of the subscriber, and/or linguistic/formal errors of the received messages can be corrected by the subscriber in order to perfect the received messages.

In a further preferable embodiment, the subscriber comprises a broker-outbox configured to send the message broker confirmations of edit of the delivered messages after the delivered messages are edited by the subscriber. It is particularly advantageous that the confirmations of edit of the delivered messages are not sent directly to the publisher, but to the intermediary message broker which is normally available in the network and functionally more stable than the most publishers. The confirmations of edit of the delivered messages are preferably temporarily stored in the message broker and then forwarded to the publisher if possible.

Due to the high availability of the message broker in the network, the subscriber normally only needs to send the message broker said confirmations of edit of the delivered messages once. Afterwards, it is the job of the message broker to transfer/forward these confirmations to the publisher. Thereby, the undesired dependency between services is reduced by the present invention.

In a further preferable embodiment, the message broker comprises a second pub-outbox configured to forward the confirmations of edit of the delivered messages from the subscriber to the publisher.

The first pub-outbox may serve as the second pub-outbox, provided that the first pub-outbox is not only able to send/transmit any type of above-mentioned confirmations to the publisher, but also able to receive the confirmations of edit of delivered messages from the subscriber.

In a further preferable embodiment, the publisher comprises a first timer unit configured to measure a first predefined time interval and configured to inform the publisher that the delivery of at least one message to the subscriber is failed when the publisher has not received at least one confirmation of message delivery to the subscriber from the message broker within the first predefined time interval. Thereby, a timeout mechanism regarding the failure of message delivery is accomplished.

In a further preferable embodiment, the publisher comprises a second timer unit configured to measure a second predefined time interval and configured to inform the publisher that the messages forwarded by the message broker have not been edited by the subscriber when the publisher has not received at least one confirmation of edit of the delivered messages from the subscriber forwarded by the message broker within the second predefined time interval. Thereby, a timeout mechanism regarding possible edit of the published messages is accomplished.

In a further preferable embodiment, the publisher comprises a third timer unit configured to measure a third predefined time interval and configured to inform the publisher that the messages received by the subscriber have not been edited by the subscriber when the publisher, after receiving at least one confirmation of message delivery to the subscriber from the message broker, has not received at least one confirmation of edit of the delivered messages from the subscriber forwarded by the message broker within the third predefined time interval. Thereby, a timeout mechanism regarding possible edit of the delivered messages is accomplished.

In a further preferable embodiment, the publisher comprises a retry unit configured to resend the message broker messages after the publisher is informed by the first timer unit that the delivery of at least one message to the subscriber is failed.

The retry unit of the publisher may alternatively only ask the message broker to forward the related messages again to the subscriber without resending these messages to the message broker after the publisher is informed by the first timer unit that the delivery of the messages to the subscriber is failed.

The retry unit may further comprise a counting unit configured to count the number of times for which messages have been resent to the message broker. If the accumulated number of times exceeds a predefined number, the related messages will not be resent again by the publisher, or, the retry unit will not any more ask the message broker to forward the related messages to the subscriber. Thereby, a waste of network resources by endlessly resending messages is avoided in the case when the subscriber cannot be reached for a considerably long time due to e.g. a power supply failure at the subscriber.

The invention further provides, according to a second aspect, a process for a publish/subscribe system, comprising the following steps:
generating messages which are categorized into topics, by at least a publisher;
forwarding the messages which are generated by the publisher and belong to at least one predefined topic which is one of the topics into which the messages generated by the publisher are categorized, from the publisher to at least a subscriber, by a message broker;
receiving only the messages which belong to the predefined topic forwarded by the message broker, by the subscriber; sending the publisher confirmations of delivery to the subscriber after messages are delivered to the subscriber, by a first pub-outbox of the message broker; and receiving the confirmations of message delivery to the subscriber from the message broker, by a postbox of the publisher.

A preferable embodiment of the process comprises further the step of:
sending the message broker confirmations of edit of the delivered messages after the delivered messages are edited by the subscriber, by a broker-outbox of the subscriber;
forwarding the confirmations of edit of the delivered messages from the subscriber to the publisher, by a second pub-outbox of the message broker; and
receiving the confirmations of edit of the delivered messages from the subscriber forwarded by the message broker, by the postbox of the publisher.

A further preferable embodiment of the process comprises further the steps of:
measuring a first predefined time interval, by a first timer unit of the publisher; and
informing the publisher that the delivery of at least one message to the subscriber is failed when the publisher has not received at least one confirmation of message delivery to the subscriber from the message broker within the first predefined time interval, by the first timer unit.

A further preferable embodiment of the process comprises further the steps of:
measuring a second predefined time interval, by a second timer unit of the publisher; and
informing the publisher that the messages forwarded by the message broker have not been edited by the subscriber when the publisher has not received at least one confirmation of edit of the delivered messages from the subscriber forwarded by the message broker within the second predefined time interval, by the second timer unit.

The invention further provides, according to a third aspect, a computer program comprising instructions which, when the program is executed by a computer, cause the computer to carry out the process according to the second aspect.

The invention further provides, according to a fourth aspect, a
computer-readable medium comprising instructions which, when executed by a computer, cause the computer to carry out the process according to the second aspect.

Further advantageous details and features may be taken from the following description of several exemplary embodiments of the invention in conjunction with the drawings, in which:
- Fig. 1: shows a schematic representation of an embodiment of the inventive publish/subscribe system;
- Fig. 2: shows a block diagram of an embodiment of the inventive process for a publish/subscribe system;
- Fig. 3: shows a block diagram of another embodiment of the inventive process for a publish/subscribe system;
- Fig. 4: shows a block diagram of another embodiment of the inventive process for a publish/subscribe system; and
- Fig. 5: shows a block diagram of another embodiment of the inventive process for a publish/subscribe system.

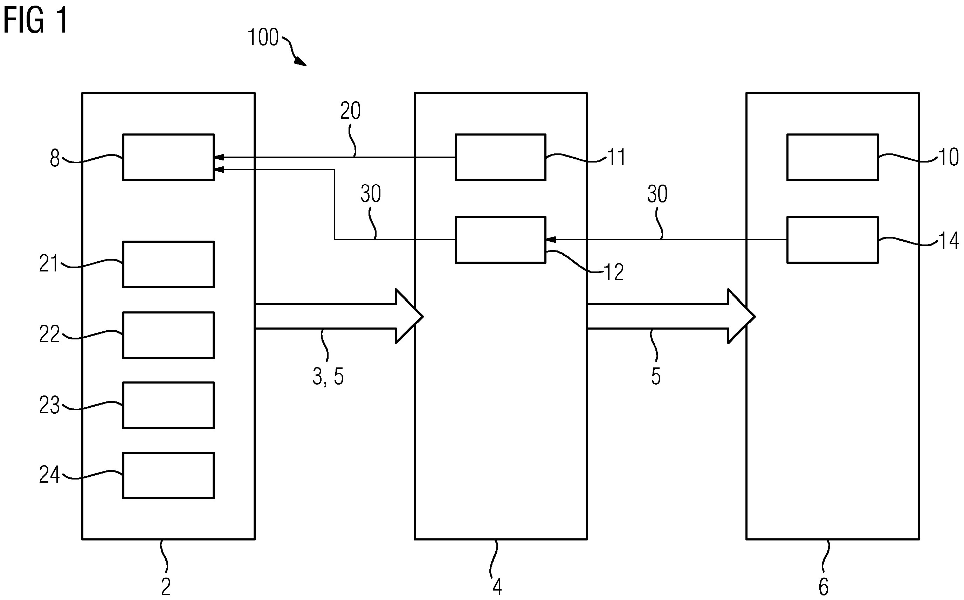

The embodiment of the inventive publish/subscribe system 100 shown in Fig. 1 comprises a publisher 2 configured to generate messages 3 which are categorized into topics, a subscriber 6 configured to receive only the messages 5 which belong to one predefined topic which is one of the topics into which the messages 3 generated by the publisher 2 are categorized, and
a message broker 4 configured to forward the messages 5 which belong to the predefined topic and which are generated by the publisher 2 from the publisher 2 to the subscriber 6.

The publisher 2 comprises a postbox 8 configured to receive confirmations 20 of message delivery to the subscriber 6 from the message broker 4. The message broker 4 comprises a first pub-outbox 11 configured to send the publisher 2 confirmations 20 of delivery to the subscriber 6 after messages 5 are delivered to the subscriber 6.

The postbox 8 of the publisher 2 is also configured to receive confirmations 30 of edit of the delivered messages 5 from the subscriber 6.

The subscriber 6 comprises an editing unit 10 configured to edit the content of the received messages 5 and a broker-outbox 14 configured to send the message broker 4 confirmations 30 of edit of the delivered messages 5 after the delivered messages 5 are edited by the subscriber 6.

The message broker 4 comprises a second pub-outbox 12 configured to forward the confirmations 30 of edit of the delivered messages 5 from the subscriber 6 to the publisher 2.

The publisher 2 further comprises a first timer unit 21 configured to measure a first predefined time interval and configured to inform the publisher 2 that the delivery of at least one message 5 to the subscriber 6 is failed when the publisher 2 has not received at least one confirmation 20 of message delivery to the subscriber 6 from the message broker 4 within the first predefined time interval.

The publisher 2 further comprises a second timer unit 22 configured to measure a second predefined time interval and configured to inform the publisher 2 that the messages 5 forwarded by the message broker 4 have not been edited by the subscriber 6 when the publisher 2 has not received at least one confirmation 30 of edit of the delivered messages 5 from the subscriber 6 forwarded by the message broker 4 within the second predefined time interval.

The publisher 2 further comprises a third timer unit 23 configured to measure a third predefined time interval and configured to inform the publisher 2 that the messages 5 received by the subscriber 6 have not been edited by the subscriber 6 when the publisher2 , after receiving at least one confirmation 20 of message delivery to the subscriber 6 from the message broker 4, has not received at least one confirmation 30 of edit of the delivered messages 5 from the subscriber 6 forwarded by the message broker 4 within the third predefined time interval.

The publisher 2 further comprises a retry unit 24 configured to resend the message broker 4 messages 5 after the publisher 2 is informed by the first timer unit 21 that the delivery of the messages 5 to the subscriber 6 is failed.

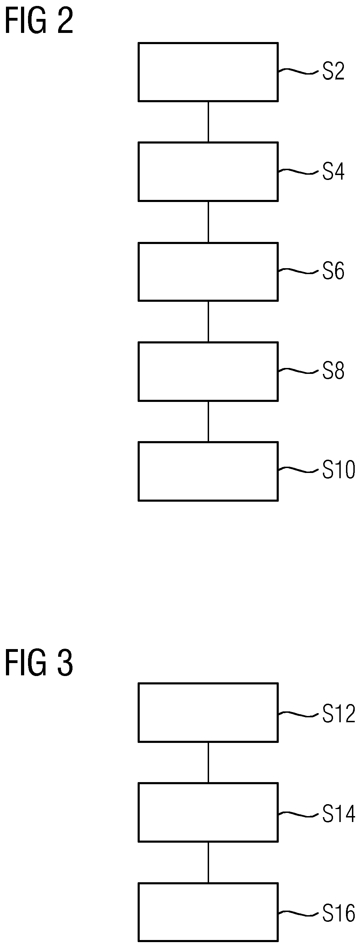

The embodiment of the inventive process for a publish/subscribe system 100 shown in Fig. 2 comprises the following steps:
generating S2 messages 3 which are categorized into topics, by at least a publisher 2;
forwarding S4 the messages 5 which are generated by the publisher 2 and belong to at least one predefined topic which is one of the topics into which the messages 3 generated by the publisher 2 are categorized, from the publisher 2 to at least a subscriber 6, by a message broker 4;
receiving S6 only the messages 5 which belong to the predefined topic forwarded by the message broker 4, by the subscriber 6;
sending S8 the publisher 2 confirmations 20 of delivery to the subscriber 6 after messages 5 are delivered to the subscriber 6, by a first pub-outbox 11 of the message broker 4; and
receiving S10 the confirmations 20 of message delivery to the subscriber 6 from the message broker 4, by a postbox 8 of the publisher 2.

The embodiment of the inventive process for a publish/subscribe system 100 shown in Fig. 3 comprises, in addition to the steps shown in Fig. 2, further the step of: sending S12 the message broker 4 confirmations 30 of edit of the delivered messages 5 after the delivered messages 5 are edited by the subscriber 6, by a broker-outbox 14 of the subscriber 6;
forwarding S14 the confirmations 30 of edit of the delivered messages 5 from the subscriber 6 to the publisher 2, by a second pub-outbox 12 of the message broker 4; and receiving S16 the confirmations 30 of edit of the delivered messages 5 from the subscriber 6 forwarded by the message broker 4, by the postbox 8 of the publisher 2.

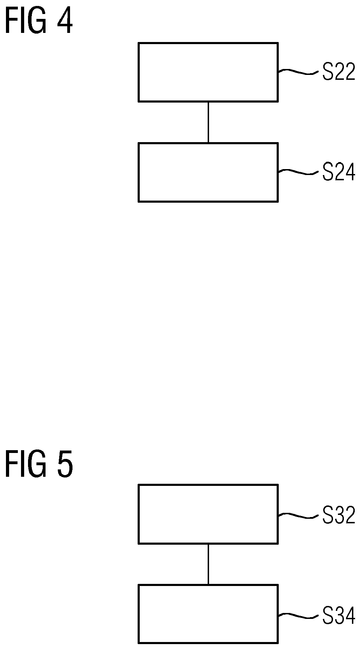

The embodiment of the inventive process for a publish/subscribe system 100 shown in Fig. 4 comprises, in addition to the steps shown in Fig. 2, further the step of: measuring S22 a first predefined time interval, by a first timer unit 21 of the publisher 2; and
informing S24 the publisher 2 that the delivery of at least one message 5 to the subscriber 6 is failed when the publisher 6 has not received at least one confirmation 20 of message delivery to the subscriber 6 from the message broker 4 within the first predefined time interval, by the first timer unit 21.

The embodiment of the inventive process for a publish/subscribe system 100 shown in Fig. 5 comprises, in addition to the steps shown in Fig. 3, further the step of: measuring S32 a second predefined time interval, by a second timer unit 22 of the publisher 2; and
informing S34 the publisher 2 that the messages 5 forwarded by the message broker 4 have not been edited by the subscriber 6 when the publisher 2 has not received at least one confirmation 30 of edit of the delivered messages 5 from the subscriber 6 forwarded by the message broker 4 within the second predefined time interval, by the second timer unit 22.

The invention is described and illustrated in detail by the preferable embodiments mentioned above. However, the invention is not limited by the disclosed examples, and other variations can be derived therefrom while still being inside the protection scope of the invention.

## Claims

1. A publish/subscribe system (100) comprising:
at least a publisher (2) configured to generate messages (3) which are categorized into topics;
at least a subscriber (6) configured to receive only the messages (5) which belong to at least one predefined topic which is one of the topics into which the messages (3) generated by the publisher (2) are categorized; and
a message broker (4) configured to forward the messages (5) which belong to the predefined topic and which are generated by the publisher (2) from the publisher (2) to the subscriber (6);
wherein the publisher (2) comprises a postbox (8) configured to receive confirmations (20) of message delivery to the subscriber (6) from the message broker (4), and
wherein the message broker (4) comprises a first pub-outbox (11) configured to send the publisher (2) confirmations (20) of delivery to the subscriber (6) after messages (5) are delivered to the subscriber (6).

2. The publish/subscribe system according to claim 1, wherein the postbox (8) of the publisher (2) is further configured to receive confirmations (30) of edit of the delivered messages (5) from the subscriber (6).

3. The publish/subscribe system according to claim 2, wherein the subscriber (6) comprises an editing unit (10) configured to edit the received messages (5), in particular the content of the received messages (5).

4. The publish/subscribe system according to claim 2 or 3, wherein the subscriber (6) comprises a broker-outbox (14) configured to send the message broker (4) confirmations (30) of edit of the delivered messages (5) after the delivered messages (5) are edited by the subscriber (6).

5. The publish/subscribe system according to one of the claims 2-4, wherein the message broker (4) comprises a second pub-outbox (12) configured to forward the confirmations (30) of edit of the delivered messages (5) from the subscriber (6) to the publisher (2).

6. The publish/subscribe system according to one of the preceding claims, wherein the publisher (2) comprises a first timer unit (21) configured to measure a first predefined time interval and configured to inform the publisher (2) that the delivery of at least one message (5) to the subscriber (6) is failed when the publisher (2) has not received at least one confirmation (20) of message delivery to the subscriber (6) from the message broker (4) within the first predefined time interval.

7. The publish/subscribe system according to one of the preceding claims, wherein the publisher (2) comprises a second timer unit (22) configured to measure a second predefined time interval and configured to inform the publisher (2) that the messages (5) forwarded by the message broker (4) have not been edited by the subscriber (6) when the publisher (2) has not received at least one confirmation (30) of edit of the delivered messages (5) from the subscriber (6) forwarded by the message broker (4) within the second predefined time interval.

8. The publish/subscribe system according to one of the preceding claims, wherein the publisher (2) comprises a third timer unit (23) configured to measure a third predefined time interval and configured to inform the publisher (2) that the messages (5) received by the subscriber (6) have not been edited by the subscriber (6) when the publisher (2), after receiving at least one confirmation (20) of message delivery to the subscriber (6) from the message broker (4), has not received at least one confirmation (30) of edit of the delivered messages (5) from the subscriber (6) forwarded by the message broker (4) within the third predefined time interval.

9. The publish/subscribe system according to one of the preceding claims, wherein the publisher (2) comprises a retry unit (24) configured to resend the message broker (4) messages (5) after the publisher (2) is informed by the first timer unit (21) that the delivery of at least one message (5) to the subscriber (6) is failed.

10. A process for a publish/subscribe system, comprising the following steps:
generating (S2) messages which are categorized into topics, by at least a publisher;
forwarding (S4) the messages which are generated by the publisher and belong to at least one predefined topic which is one of the topics into which the messages generated by the publisher are categorized, from the publisher to at least a subscriber, by a message broker;
receiving (S6) only the messages which belong to the predefined topic forwarded by the message broker, by the subscriber;
sending (S8) the publisher confirmations of delivery to the subscriber after messages are delivered to the subscriber, by a first pub-outbox of the message broker; and
receiving (S10) the confirmations of message delivery to the subscriber from the message broker, by a postbox of the publisher.

11. The process according to claim 10, comprising further the step of:
sending (S12) the message broker confirmations of edit of the delivered messages after the delivered messages are edited by the subscriber, by a broker-outbox of the subscriber;
forwarding (S14) the confirmations of edit of the delivered messages from the subscriber to the publisher, by a second pub-outbox of the message broker; and
receiving (S16) the confirmations of edit of the delivered messages from the subscriber forwarded by the message broker, by the postbox of the publisher.

12. The process according to claim 10 or 11, comprising further the steps of:
measuring (S22) a first predefined time interval, by a first timer unit of the publisher; and
informing (S24) the publisher that the delivery of at least one message to the subscriber is failed when the publisher has not received at least one confirmation of message delivery to the subscriber from the message broker within the first predefined time interval, by the first timer unit.

13. The process according to one of the claims 10-12, comprising further the steps of:
measuring (S32) a second predefined time interval, by a second timer unit of the publisher; and
informing (S34) the publisher that the messages forwarded by the message broker have not been edited by the subscriber when the publisher has not received at least one confirmation of edit of the delivered messages from the subscriber forwarded by the message broker within the second predefined time interval, by the second timer unit.

14. A computer program comprising instructions which, when the program is executed by a computer, cause the computer to carry out the process of any one of claims 10 to 13.

15. A computer-readable medium comprising instructions which, when executed by a computer, cause the computer to carry out the process of any one of claims 10 to 13.

## Amended claims

### Amended claims in accordance with Rule 137(2) EPC.

1. A publish/subscribe system (100) comprising:
at least a publisher (2) configured to generate messages (3) which are categorized into topics;
at least a subscriber (6) configured to receive only the messages (5) which belong to at least one predefined topic which is one of the topics into which the messages (3) generated by the publisher (2) are categorized; and
a message broker (4) configured to forward the messages (5) which belong to the predefined topic and which are generated by the publisher (2) from the publisher (2) to the subscriber (6);
wherein the publisher (2) comprises a postbox (8) configured to receive confirmations (20) of message delivery to the subscriber (6) from the message broker (4),
wherein the message broker (4) comprises a first pub-outbox (11) configured to send the publisher (2) confirmations (20) of delivery to the subscriber (6) after messages (5) are delivered to the subscriber (6),
wherein the postbox (8) of the publisher (2) is further configured to receive confirmations (30) of edit of the delivered messages (5) from the subscriber (6),
wherein the subscriber (6) comprises an editing unit (10) configured to edit the content of the received messages (5) .

2. The publish/subscribe system according to claim 1,
wherein the subscriber (6) comprises a broker-outbox (14) configured to send the message broker (4) confirmations (30) of edit of the delivered messages (5) after the delivered messages (5) are edited by the subscriber (6).

3. The publish/subscribe system according to one of the claims 1 or 2, wherein the message broker (4) comprises a second pub-outbox (12) configured to forward the confirmations (30) of edit of the delivered messages (5) from the subscriber (6) to the publisher (2).

4. The publish/subscribe system according to one of the preceding claims, wherein the publisher (2) comprises a first timer unit (21) configured to measure a first predefined time interval and configured to inform the publisher (2) that the delivery of at least one message (5) to the subscriber (6) is failed when the publisher (2) has not received at least one confirmation (20) of message delivery to the subscriber (6) from the message broker (4) within the first predefined time interval.

5. The publish/subscribe system according to one of the preceding claims, wherein the publisher (2) comprises a second timer unit (22) configured to measure a second predefined time interval and configured to inform the publisher (2) that the messages (5) forwarded by the message broker (4) have not been edited by the subscriber (6) when the publisher (2) has not received at least one confirmation (30) of edit of the delivered messages (5) from the subscriber (6) forwarded by the message broker (4) within the second predefined time interval.

6. The publish/subscribe system according to one of the preceding claims, wherein the publisher (2) comprises a third timer unit (23) configured to measure a third predefined time interval and configured to inform the publisher (2) that the messages (5) received by the subscriber (6) have not been edited by the subscriber (6) when the publisher (2), after receiving at least one confirmation (20) of message delivery to the subscriber (6) from the message broker (4), has not received at least one confirmation (30) of edit of the delivered messages (5) from the subscriber (6) forwarded by the message broker (4) within the third predefined time interval.

7. The publish/subscribe system according to one of the preceding claims, wherein the publisher (2) comprises a retry unit (24) configured to resend the message broker (4) messages (5) after the publisher (2) is informed by the first timer unit (21) that the delivery of at least one message (5) to the subscriber (6) is failed.

8. A process for a publish/subscribe system, comprising the following steps:
generating (S2) messages which are categorized into topics, by at least a publisher;
forwarding (S4) the messages which are generated by the publisher and belong to at least one predefined topic which is one of the topics into which the messages generated by the publisher are categorized, from the publisher to at least a subscriber, by a message broker;
receiving (S6) only the messages which belong to the predefined topic forwarded by the message broker, by the subscriber;
sending (S8) the publisher confirmations of delivery to the subscriber after messages are delivered to the subscriber, by a first pub-outbox of the message broker; and
receiving (S10) the confirmations of message delivery to the subscriber from the message broker, by a postbox of the publisher,
wherein the process comprises further the step of:
sending (S12) the message broker confirmations of edit of the delivered messages after the content of the delivered messages are edited by the subscriber, by a broker-outbox of the subscriber;
forwarding (S14) the confirmations of edit of the delivered messages from the subscriber to the publisher, by a second pub-outbox of the message broker; and
receiving (S16) the confirmations of edit of the delivered messages from the subscriber forwarded by the message broker, by the postbox of the publisher.

9. The process according to claim 8, comprising further the steps of:
measuring (S22) a first predefined time interval, by a first timer unit of the publisher; and
informing (S24) the publisher that the delivery of at least one message to the subscriber is failed when the publisher has not received at least one confirmation of message delivery to the subscriber from the message broker within the first predefined time interval, by the first timer unit.

10. The process according to claim 8 or 9, comprising further the steps of:
measuring (S32) a second predefined time interval, by a second timer unit of the publisher; and
informing (S34) the publisher that the messages forwarded by the message broker have not been edited by the subscriber when the publisher has not received at least one confirmation of edit of the delivered messages from the subscriber forwarded by the message broker within the second predefined time interval, by the second timer unit.

11. A computer program comprising instructions which, when the program is executed by a computer, cause the computer to carry out the process of any one of claims 8 to 10.

12. A computer-readable medium comprising instructions which, when executed by a computer, cause the computer to carry out the process of any one of claims 8 to 10.
